# EUROPÄISCHE PATENTSCHRIFT

(11) **EP 3 781 450 B1**
(45) Veröffentlichungstag und Bekanntmachung des Hinweises auf die Patenterteilung: **11.05.2022**
(21) Anmeldenummer: 19715843.9
(22) Anmeldetag: 22.03.2019
(51) Int. Cl.: B60W 30/16, B62D 15/02, G08G 1/00

(54) **VERFAHREN UND SYSTEM ZUR ABSTANDSREGELUNG EINES EIGENFAHRZEUGS**
METHOD AND SYSTEM FOR DISTANCE CONTROL OF A SUBJECT VEHICLE
PROCÉDÉ ET SYSTÈME DE RÉGULATION DE DISTANCE D'UN VÉHICULE PROPRE

(30) Priorität: 18.04.2018 DE 102018109235
(43) Veröffentlichungstag der Anmeldung: 24.02.2021
(73) Patentinhaber: ZF CV Systems Europe BV, 1170 Brussels (BE)
(72) Erfinder: DIECKMANN, Thomas, 30982 Pattensen (DE); LÜLFING, Ralph-Carsten, 30826 Garbsen (DE); WULF, Oliver, 31535 Neustadt (DE); KALLENBACH, Stephan, 30161 Hannover (DE)
(74) Vertreter: Rabe, Dirk-Heinrich
(86) Internationale Anmeldenummer: PCT/EP2019/057299
(87) Internationale Veröffentlichungsnummer: WO 2019/201555

(56) Entgegenhaltungen:
- DE-A1-102016 004 291
- DE-A1-102016 012 414
- DE-A1-102016 213 039

## Beschreibung

Die Erfindung betrifft ein Verfahren zur Abstandsregelung eines Eigenfahrzeugs und ein Abstandsregelsystem.

Der Kraftstoffverbrauch von Nutzfahrzeugen, insbesondere Lkw, wird insbesondere auf längeren Fahrten mit gleichmäßiger Geschwindigkeit wesentlich durch den Luftwiderstand bestimmt. Hinter einem Lkw bildet sich eine Zone mit Verwirbelungen und geringerem Luftdruck, die auch als Windschatten bezeichnet wird. Fährt ein nachfolgendes Fahrzeug hinreichend dicht hinter dem Vorderfahrzeug, so sinkt der Treibstoffverbrauch des hinteren Fahrzeugs; hierzu sind jedoch bei Lkw mit einer Fahrtgeschwindigkeit von z. B. 80 bis 100 km/h Abstände von deutlich unter dem üblichen Sicherheitsabstand von z. B. 50 m erforderlich, ein hinreichend großer Sicherheitsabstand ist jedoch erforderlich, damit das hintere Fahrzeug bei z. B. einer abrupten Bremsung des Vorderfahrzeugs hinreichend schnell bremsen kann.

Autonome Abstandsregelsysteme (ACC, Adaptive Cruise Control) dienen als Komfortsysteme und weisen im Allgemeinen ein Umwelterfassungssystem wie z. B. eine Radareinrichtung auf, um durch autonome Brems- und auch Motoreingriffe einen Abstand zum Vorderfahrzeug konstant zu regeln. Als Komfortsysteme sind die maximale Verzögerung und die Bremsrampen, d.h. die zeitliche Änderung der Verzögerung, begrenzt. Um eine WindschattenFahrt eines hinteren Fahrzeugs zu ermöglichen, sind die hierbei vorgesehenen Abstände jedoch zu groß.

Weiterhin sind AEBS (Advanced Emgergency Brake Systems) bekannt, die als Notbremssysteme eingreifen, wenn ein Unfall unmittelbar bevorsteht und vom Fahrer voraussichtlich nicht mehr alleine verhindert werden kann. Für ein AEBS ist eine AEBS-Kaskade vorgesehen, gemäß der vor der Notbremsung, z.B. mindestens 1,4 sec vorher, zunächst eine erste Warnung ausgegeben wird, z. B. optisch, akustisch oder haptisch. Hierdurch wird dem Fahrer die Gelegenheit gegeben, hierauf zu reagieren; so kann der Fahrer z. B. je nach Verkehrssituation einen Ausweichvorgang einleiten und die Fahrspur wechseln, oder selbst eine Bremsung einleiten. Nach der ersten Warnung kann eine Teilbremsung eingeleitet werden. Kurz vor der Notbremsung wird eine zweite Warnung ausgegeben und dann die Vollbremsung, d.h. mit vollem Bremsdruck, als Notbremsung eingeleitet.

Bei Platooning-Systemen bzw. Systemen zur Einleitung einer automatisierten Konvoifahrt (Kolonnenfahrt) stehen zwei oder mehr Fahrzeuge miteinander in einer Datenverbindung (V2V, Vehicle-to-Vehicle-Communication). Hierdurch können die Fahrzeuge des Verbundes bzw. Konvois miteinander kommunizieren, so dass z. B. das Vorderfahrzeug eine unmittelbar bevorstehende oder eingeleitete Bremsung den hinteren Fahrzeugen sofort mitteilt, so dass die hinteren Fahrzeuge nicht erst den Bremsvorgang des vorderen Fahrzeugs detektieren müssen, sondern sofort einen entsprechenden Bremsvorgang, insbesondere mit einander angepassten Bremsdrücken bzw. Soll-Verzögerungen, einleiten können. Derartige Platooning-Systeme erlauben sehr geringe Abstände von z. B. 15 m zu dem jeweiligen Vorderfahrzeug und hierdurch eine deutliche Kraftstoffersparnis. Sie setzen jedoch eine entsprechende V2V-Datenverbindung zwischen den Fahrzeugen mit normierten Befehlssätzen voraus, wobei auch die technische Ausstattung, z. B. der Zustand der Bremsen, hinreichend angepasst sein muss.

Auch treten Probleme bei den üblichen Umwelterfassungssystemen auf Basis von Radar-Detektoren oder Radar-Messgeräten auf. So können Radar-Systeme z. B. Objekte fälschlicherweise als stationäre Hindernisse erkennen, z. B. Brücken, die grundsätzlich befahrbar sind. Auch Laub oder Papier auf der Straße kann fälschlicherweise als kollisionsbegründendes stationäres Objekt erkannt werden. Auch hierdurch sind Ausweitungen von ACC oder AEBS-Systemen Grenzen gesetzt.

Die DE102016004291A1 offenbart eine Vorrichtung, ein System und ein Verfahren zum Unterstützen eines Fahrers eines ersten Fahrzeugs beim Bilden eines Fahrzeugzugs mit einem zweiten Fahrzeug. Die Vorrichtung ist konfiguriert, um einen Positionsparameter und einen Geschwindigkeitsparameter des zweiten Fahrzeugs zu bestimmen. Die Vorrichtung ist weiterhin konfiguriert, um eine Geschwindigkeitsveränderung für das erste Fahrzeug und/oder eine Geschwindigkeitsveränderung für das zweite Fahrzeug basierend auf dem Positionsparameter und dem Geschwindigkeitsparameter des zweiten Fahrzeugs zu bestimmen, um einen Abstand zwischen dem ersten Fahrzeug und dem zweiten Fahrzeug zu erreichen, der ein Fahrzeugzugkriterium zum Bilden eines Fahrzeugzugs erfüllt. Basierend auf der Bestimmung ist die Vorrichtung zum Informieren des Fahrers des ersten Fahrzeugs über die Möglichkeit zur Bildung eines Fahrzeugzugs konfiguriert.

Der Erfindung liegt daher die Aufgabe zugrunde, ein Verfahren zur Abstandsregelung und ein derartiges Abstandsregelsystem für ein Eigenfahrzeug zu schaffen, die eine hohe Sicherheit und die Möglichkeit eines ökonomischen Fahrens mit geringem Kraftstoffverbrauch ermöglichen.

Diese Aufgabe wird durch ein Verfahren und ein Abstandsregelsystem nach den unabhängigen Ansprüchen gelöst. Die Unteransprüche beschreiben bevorzugte Weiterbildungen.

Das erfindungsgemäße Verfahren kann insbesondere mit einem erfindungsgemäßen Abstandsregelsystem durchgeführt werden; das erfindungsgemäße Abstandsregelsystem kann insbesondere ein erfindungsgemäßes Verfahren einsetzen.

Somit ist vorgesehen, dass ein Abstandsregelsystem des Fahrzeugs mit seinem Umfelderfassungssystem, insbesondere einer Radareinrichtung, bei Erfassen eines vorderen Objektes selbsttätig prüft, ob die Voraussetzungen erfüllt sind, ein Abstandsregelverfahren mit reduziertem Abstand einzuleiten. Ein derartiges Abstandsregelverfahren mit reduziertem Abstand oder ACC-P erfolgt hierbei ohne Datenverbindung mit einem Vorderfahrzeug, d. h. es stellt kein Platooning-System dar. Entsprechend wird vorteilhafterweise auch lediglich ein erster Sicherheitsabstand eingestellt, der deutlich über den bei Platooning-Systemen möglichen Sicherheitsabständen liegt.

Gegenüber einem ACC-System werden jedoch Änderungen vorgenommen, die zum einen beim Einleiten als Auswahlkriterien vorgesehen sind, um lediglich geeignete Vorderfahrzeuge auszuwählen; weiterhin sind bei den Regeleingriffen vorteilhafterweise Änderungen gegenüber einem herkömmlichen ACC vorgesehen.

Das Abstandsregelsystem mit reduziertem Abstand stellt somit einen ACC-Platooning-Modus oder ACC-P-Modus bzw. ACC-P als Abstandsregelsystem mit verringertem Sicherheitsabstand ohne Datenverbindung mit dem Vorderfahrzeug dar.

Als geeignete Kriterien bzw. Auswahlkriterien sind insbesondere vorgesehen:
Das Umfelderfassungssystem, insbesondere die Radar-Einrichtung des Fahrzeugs, erfasst vor dem Eigenfahrzeug ein bewegtes Objekt. Insbesondere beim Einsatz einer Radar-Einrichtung ergeben sich hierdurch deutliche Vorteile, da die Radar-Systemgrenzen insbesondere stationäre Objekte betreffen und bei bewegten Objekten im Allgemeinen Fehl-Erfassungen nicht auftreten.

Gemäß einem weiteren Kriterium wird das Vorder-Fahrzeug mindestens eine Mindestzeit oder Mindest-Verfolgungszeit verfolgt, z. B. mit einer Object-Lifetime > 30 s. Somit kann automatisiert erkannt werden, dass das Vorderfahrzeug eine entsprechend gleichmäßige, ruhige Fahrt durchführt, die ausreichend ist, um ein Konvoi-artiges System auszubilden.

Gemäß einem weiteren Kriterium ist die Relativgeschwindigkeit oder Differenzgeschwindigkeit zwischen dem Vorderfahrzeug und dem Eigenfahrzeug hinreichend gering bzw. nahe bei 0 m/s, wodurch wiederum eine Konvoi-artige Fahrt sichergestellt wird.

Gemäß einem weiteren Kriterium ist der Abstand zwischen dem Vorderfahrzeug und dem Eigenfahrzeug hinreichend konstant, d.h. z.B. eine Änderung des Abstandes ist unterhalb eines Abstands-Grenzwertes, wodurch wiederum eine Konvoi-artige Fahrt sichergestellt wird.

Weiterhin können ergänzende Kriterien bzw. Auswahlkriterien vorgesehen sein. So kann das Vorderfahrzeug klassifiziert werden, wobei dann eine geeignete Objektklasse als Kriterium vorgesehen sein kann, z. b. die Objektklasse Lkw/Truck, um nicht einem Fahrzeug zu folgen, das mit höherer Wahrscheinlichkeit einen nicht passenden Fahrstil wählt. Weiterhin kann das Vorderfahrzeug bezüglich seiner Breite und/oder Höhe erfasst werden. Hierbei kann zum einen als Kriterium angesetzt werden, dass die Breite bzw. Höhe konstant ist. Auch kann die Fahrzeug-Breite und/oder Fahrzeug-Höhe in einem geeigneten Bereich liegen, z. B. eine Fahrzeugbreite von 2,5 m. Auch hierdurch wird sichergestellt, dass der vom Vorderfahrzeug erzeugte Windschatten für das Eigenfahrzeug passend ist, da beim Folgen eines anderen Objektes, z. B. eines Pkw, keine relevante Kraftstoffersparnis zu erwarten ist, sondern vielmehr wiederum eher eine unruhige bzw. nicht geeignete Fahrt des Vorderfahrzeugs möglich ist, die lediglich Sicherheitsprobleme aufwerfen kann.

Gemäß einem weiteren Kriterium kann vorgesehen sein, dass im Eigenfahrzeug bereits das ACC eingeschaltet ist. Allerdings kann auch vorgesehen sein, dass das Umfelderfassungssystem auch bei noch nicht eingeschaltetem ACC bereits überprüft, ob ein ACC-P möglich ist.

Sobald das eigene System bzw. die ACC-Steuereinrichtung des Abstandsregelsystems festgestellt hat, das die vorgesehenen Kriterien erfüllt sind, gibt sie vorzugsweise zunächst dem Fahrer einen Hinweis, z. B. optisch, aber auch z. B. akustisch oder haptisch. Hierdurch wird beim Fahrer angefragt, ob er den ACC-P-Modus wählen will. Wenn der Fahrer auf dieses Anzeigesignal oder Anfragesignal hin ein Bestätigungssignal, z. B. durch Drücken einer Schaltfläche im Dashboard, an die ACC-Steuereinrichtung gibt, so startet diese nachfolgend den ACC-P-Modus.

Im ACC-P-Modus sind dann gegenüber einem herkömmlichen ACC andere Einstellungen gesetzt. So ist insbesondere der Sicherheitsabstand oder Regelabstand zum Vorderfahrzeug verkürzt.

Auch gegenüber einem AEBS weist das ACC-P Unterschiede auf. So ist vorteilhafterweise die vorgesehene AEBS-Kaskade aus Warnung-Teilbremsung-Vollbremsung gekürzt und kann lediglich Warnung-Vollbremsung oder auch direkt eine Bremsung, z.B. als Teilbremsung oder auch Vollbremsung ermöglichen, da der gesamte autonome Bremsvorgang bereits von einem verringerten Abstand aus eingeleitet wird und somit nicht durch die Fahrerwarnung und Reaktion des Fahrers unnötig Zeit verloren wird, die bei dem verringerten Regelabstand problematisch ist. Somit kann trotz des geringen Abstandes beim ACC-P eine hohe Sicherheit gewährleistet werden. Vorzugsweise ist jedoch eine ergänzende Fahrwarnung zumindest bei Einleiten einer Notbremsung bzw. Vollbremsung vorgesehen.

So kann bei dem ACC vorgesehen sein, einen ersten Sollabstand oder Sicherheitsabstand und einen nachfolgenden, geringeren Sicherheitsabstand vorzusehen, wobei das ACC in den ersten Sollabstand "eintaucht", bis der zweite Sollabstand oder zweite Sicherheitsabstand erreicht wird, der dann eine absolute Grenze darstellt. Hingegen ist beim ACC-P-Modus keine derartige Unterteilung vorgesehen, da der verringerte Sollabstand bereits hinreichend nah am zweiten Sicherheitsabstand ist.

Insbesondere kann die oben bereits genannte AEBS-Kaskade reduziert sein auf eine direkte Bremsung, z. B. auf eine direkte Notbremsung, Hierbei ist vorteilhafterweise jedoch ergänzend eine Fahrerwarnung vorgesehen, um den Fahrer über die eingeleitete Notbremsung zu informieren.

Weiterhin ist vorzugsweise bereits im ACC-Modus ACC die TempomatFunktion, d.h. ein CruiseControl-Modus CC gesetzt. Somit wird durch den CC-Modus eine Setzgeschwindigkeit bzw. Zielgeschwindigkeit vorgegeben. Der auf den CC-Modus zusätzlich eingestellte ACC-Modus ACC beschränkt somit nur das Motormoment, erhöht dieses aber nicht. Hingegen kann gemäß einer vorteilhaften Ausführungsform der ACC-P-Modus - anders als der ACC-Modus - auch aktiv ein höheres Motormoment als der CC_Modus anfordern. Insbesondere können hierfür separate Steuereinrichtungen vorgesehen sein: die CC-Steuereinrichtung gibt Motoranforderungssignale an das Motorsteuergerät, und die ACC-Steuereinrichtung begrenzt im ACC-Modus nur das Motormoment, hingegen kann sie im ACC-P-Modus auch höhere Motormomente anfordern. Der Vorteil von einer zusätzlichen CC-Steuereinrichtung neben der ACC-Steuereinrichtung besteht darin, dass diese modulartig im Fahrzeug verbaut werden können. Damit wird eine hohe Flexibilität erreicht.

Dies kann gemäß einer Ausbildung direkt erfolgen, d.h. die ACC-Steuereinrichtung hat im ACC-P-Modus die Möglichkeit, beim Motorsteuergerät über ein Motoranforderungssignal eine höhere Leistung anzufordern. Gemäß einer hierzu alternativen zweiten Ausführungsform schickt die ACC-Steuereinrichtung ein Motoranforderungssignal an die CC-Steuereinrichtung, die dann gegebenenfalls ein Motoranforderungssignal an das Motorsteuergerät schickt. Gemäß einer dritten Ausführungsform gibt das ACC-Steuergerät in dem ACC-P-Modus bei Erkennen, dass die Begrenzung des Motormomentes nicht ausreicht, um im ACC-P-Modus dicht genug auf das Vorderfahrzeug aufzuschließen, ein Anzeigesignal an den Fahrer, dass dieser die Setzgeschwindigkeit bzw. Zielgeschwindigkeit des CC erhöhen soll; somit erfolgt die Erhöhung des Motormomentes durch eine Freigabe des Fahrers.

Weiterhin ist im ACC-P-Modus vorteilhafterweise die maximale Verzögerung gegenüber dem ACC deutlich erhöht, z. B. von 2,5 m/s² auf 7,5 m/s². Gemäß einer weiteren vorteilhaften Ausbildung sind schärfere Regelungen des ACC-P im Vergleich zum ACC vorgesehen, z. B. steilere Bremsrampen, d. h. zeitliche Änderungen der Soll-Verzögerungen, so kann eine Bremsrampe von 2,5 m/s³ auf z. B. das Doppelte oder mehr erhöht werden, so dass auch die ausgeübte Beschleunigung schneller erhöht wird - bezogen auf den Betrag bzw. Absolutwert.

Somit wird auch eine Notbremsung automatisch schneller erreicht, vergleichbar mit dem schlagartigen Treten des Bremspedals auf eine volle Notbremsung.

Weiterhin kann im ACC-P - anders als im ACC -eine höhere Verzögerung anfordern als diejenige des Vorderfahrzeugs, um hierdurch den Abstand konstant zu halten oder auch zu vergrößern. So kann z. B. auch vorgesehen sein, dass beim Erkennen einer Verzögerung des Vorderfahrzeugs bewusst eine größere Verzögerung des Eigenfahrzeugs eingestellt wird. Dem liegt die Überlegung zugrunde, dass durch das Messprinzip des Umwelterfassungssystems wie z. B. einer Radar-Einrichtung zunächst das Vorderfahrzeug erst verzögern muss, damit das Umwelterfassungssystem des Folgefahrzeugs diese Verzögerung misst und darauf reagiert. Bei einem Bremsvorgang oder Verzögerungsvorgang des Vorderfahrzeugs würde somit zunächst das Folgefahrzeug jeweils zeitlich verspätet reagieren, so dass selbst bei identischer Verzögerung beider Fahrzeuge eine kontinuierliche Abstandsreduzierung auftreten kann. Indem das Folgefahrzeug beim Erkennen eines Verzögerungsvorgangs des Vorderfahrzeugs gezielt eine höhere Sollverzögerung anfordert, kann eine derartige kontinuierliche Abstandsreduzierung verhindert werden.

Die ACC-Steuereinrichtung kann im ACC-P-Modus grundsätzlich - wie im herkömmlichen ACC-Modus oder auch wie ein AEBS, durch Anforderungssignale bzw. Steuersignale bei der Motorsteuereinrichtung und der Bremsensteuereinrichtung Sollwerte anfordern, z. B. eine Sollverzögerung oder ein Soll-Beschleunigungsmoment. Ein herkömmliches ACC versucht im Allgemeinen, die Dauerbremsen oder Retarder des Fahrzeugs zu verwenden, um den Verschleiß der Betriebsbremsen (Abbremsen) zu gering zu halten. Vorteilhafterweise ist im ACC-P-Modus diese Regelstrategie jedoch geändert. So kann vorgesehen sein, die Dauerbremsen gar nicht zu verwenden, oder lediglich für geringere Soll-Verzögerungen die Dauerbremse anzufordern. Vorteilhafterweise wird der ACC-P-Modus sofort beendet, wenn eines der Kriterien nicht mehr erfüllt ist. Auch wird er sofort beendet, wenn ein Einschervorgang eines Fahrzeugs von einer benachbarten Fahrspur erkannt wird. Falls das eingescherte Fahrobjekt dann vom Umfelderfassungssystem erfasst wird, müssen zunächst wieder die o. g. Kriterien erfüllt sein, damit der ACC-P-Modus dem Fahrer vorgeschlagen wird.

Die Erfindung wird im Folgenden anhand der beiliegenden Zeichnungen an einer Ausführungsform näher erläutert. Es zeigen:
- Fig. 1: eine Seitenansicht einer Kolonne aus zwei Fahrzeugen mit Vorderfahrzeug und Eigenfahrzeug in Aufsicht;
- Fig. 2: die entsprechende Darstellung mit einscherendem Fahrzeug;
- Fig. 3: ein Blockdiagramm eines erfindungsgemäßen Regelsystems;
- Fig. 4: ein Flussdiagramm eines erfindungsgemäßen Verfahrens;
- Fig. 5: Zeitdiagramme der Geschwindigkeiten und Beschleunigungen im ACC-Modus und im ACC-P-Modus;
- Fig. 6: Zeitdiagramme der Geschwindigkeiten und Beschleunigungen im AEBS-Modus und im ACC-P-Modus ;
- Fig. 7: eine gegenüber Fig. 3 geänderte Ausbildung mit zusätzlicher CC-Steuereinrichtung..

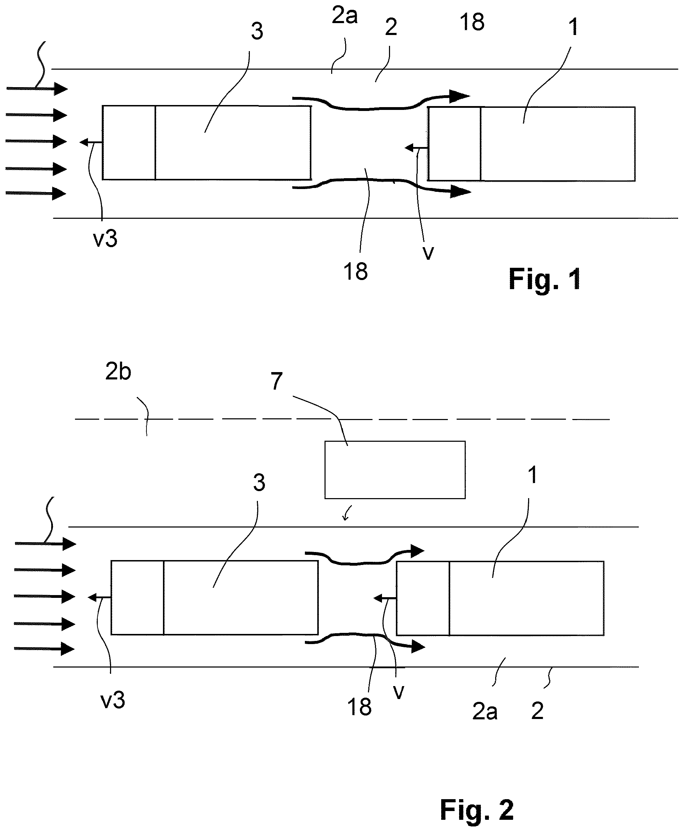

Ein Eigenfahrzeug 1 fährt auf einer Fahrbahn (Straße) 2, gemäß der Aufsicht der Fig. 2 auf einer eigenen Fahrspur 2a. Vor dem Eigenfahrzeug 1 fährt ein Vorderfahrzeug 3, das mit dem Eigenfahrzeug 1 in keiner Datenverbindung bzw. keiner Datenverbindung unter autonomer Übertragung von Fahrdynamikdaten und/oder Steuersignalen für Fahrzeugeingriffe, insbesondere Bremsvorgängen ist.

Das Eigenfahrzeug 1 weist als erstes Umfelderfassungssystem eine Radareinrichtung 4 auf, mit der ein Abstand d zu einem Vorderobjekt 3 erfasst werden kann. Ergänzend kann das Eigenfahrzeug 1 noch weitere Umfelderfassungssysteme aufweisen, z. B. eine Kamera 5, die jedoch grundsätzlich nicht erforderlich ist. Das Eigenfahrzeug 1 weist weiterhin ein Abstandsregelsystem 8 auf, das das erste Umfelderfassungssystem 4 und eine ACC-Steuereinrichtung 10 aufweist, wobei die ACC-Steuereinrichtung 10 des Abstandsregelsystems 8 erste Messsignale S1 aufnimmt und Motoranforderungssignale S2 an eine Motorsteuereinrichtung 12 zur Ansteuerung eines Fahrzeugmotors, sowie Bremsanforderungssignale S3 an eine Bremsensteuereinrichtung 14 zur Ansteuerung von zum einen Betriebsbremsen (Reibungsbremsen) 15 und weiterhin eines Retarders (verschleißfreie Bremse, Dauerbremse) 16 ausgibt.

Die ACC-Steuereinrichtung 10 kann verschiedene Modi einstellen. So kann ein normaler Fahrmodus M0 vorliegen, und es kann ein autonomer Abstandsregel-Modus ACC eingestellt werden, bei dem in bekannter Weise über mindestens das erste Umfelderfassungssystem, d. h. die Radareinrichtung 4, und ggf. auch über die Kamera 5 das Umfeld erfasst wird, so dass ein konstanter räumlicher Abstand d und/oder zeitlicher Abstand dt bei konstanter Differenzgeschwindigkeit Δv = 0 zwischen dem Vorderfahrzeug 3 und dem Eigenfahrzeug 1 eingestellt werden kann, d. h. als autonomes Abstands-Haltesystem.

Grundsätzlich kann die Abstandsregeleinrichtung 8 ergänzend auch über einen Platooning-Modus verfügen, bei dem es mit weiteren Fahrzeugen, z. B. dem Vorderfahrzeug 3, Signale austauscht. In dem nachfolgend beschriebenen Verfahren erfolgt jedoch keine Datenübertragung mit dem Vorderfahrzeug 3, um durch ein derartiges Platooning-System einen geringen Abstand d einzustellen.

Weiterhin kann die Abstandsregeleinrichtung 8 über ein AEBS als autonomes Notbremsverfahren verfügen, so dass bei Erkennen einer Notbremssituation selbsttätig die AEBS-Kaskade aus Fahrerwarnung, Teilbremsung und Notbremsung eingeleitet wird. Das AEBS kann insbesondere auch einem ACC-Modus heraus selbsttätig eingeleitet werden.

Hinter dem Vorderfahrzeug 3 entsteht eine Windschatten- oder Drag-Zone 18, in der grundsätzlich eine Wirbelbildung und ein leichter Unterdruck entsteht. Das Eigenfahrzeug 1 erfährt in normalem Fahrmodus M0 und auch in dem ACC-Modus ACC entweder den normalen Fahrtwind 21 oder zusätzliche Verwirbelungen, gerät jedoch nicht in die Drag-Zone 18, um hierdurch eine Windschattenfahrt mit reduziertem Kraftstoffverbrauch zu erreichen.

Die ACC-Steuereinrichtung 10 ist weiterhin dazu ausgebildet, von dem normalen ACC in einen automatischen Abstandsregel-Platooning-Modus ACC-P überzugehen.

Somit kann die ACC-Steuereinrichtung 10 einen normalen Fahrmodus M0, einen ACC-Modus ACC, und den automatischen Abstandsregel-Platooning-Modus ,abgekürzt ACC-P-Modus, ACC-P einstellen.

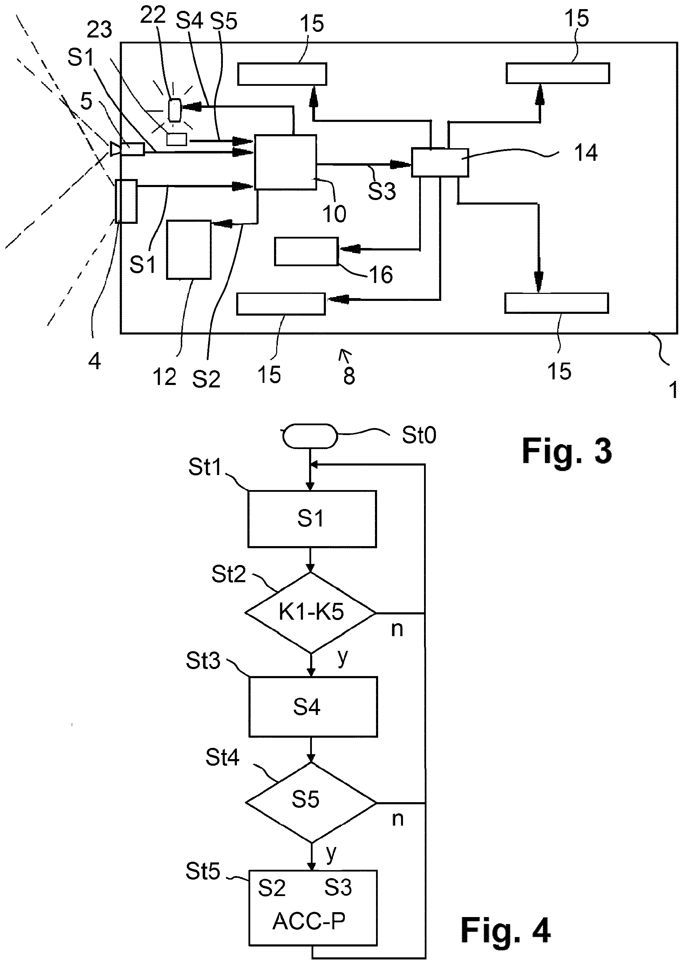

Hierbei stellt die ACC-Steuereinrichtung 10 den ACC-P ein, wenn sie gemäß dem Flussdiagramm der Fig. 4 erkennt, dass die Kriterien (EntscheidungsKriterien) K1 bis mindestens K5 erfüllt sind. Hierbei soll insbesondere eine Folgefahrtsituation FS zu dem Vorderfahrzeug 3 erkannt werden, die eine hinreichende Sicherheit gewährt. Nach dem Start St0 werden somit über das erste Umfelderfassungssystem in Schritt St1 Messsignale S1 aufgenommen. Dann werden in Schritt St2 folgende Kriterien bewertet:
Erstes Kriterium K:1: die Radareinrichtung 4 erfasst als vorderes Objekt ein Vorderfahrzeug 3, d. h. ein bewegtes Objekt:
Hierdurch wird insbesondere auch erreicht, dass die Radar-Systemgrenzen, die bei stationären Objekten problematisch sind, z. B. das fehlerhafte Erkennen von nicht relevant Objekten wie Brücken und z. B. auch Dreck, Papier oder Straßenkanten als Abstandsobjekte ausgeschlossen werden kann. Hierbei wird der Erkenntnis Rechnung getragen, dass das Erfassen bewegter Objekte durch eine Radareinrichtung 4 sehr sicher ist.

Zweites Kriterium K2: Weiterhin wird das Vorderfahrzeug 3 über mindestens einen Mindest-Folgezeitraum t_min durchgehend erfasst,
drittes Kriterium K3: es wird immer das gleiche Objekt als Vorderfahrzeug 3 erfasst wird, d. h. keine wechselnden Objekte.

Viertes Kriterium K4: Weiterhin erkennt die ACC-Steuereinrichtung 10, dass das Eigenfahrzeug 1 mit einem annähernd konstanten räumlichen Abstand d oder zeitlichen Abstand dt zum Vorderfahrzeug 3 fährt. Hierbei wird als annähernd konstant z. B. ein Folgen-Abstandsbereich von Δd_lim von ± 1 m, oder als zeitlicher Folgen-Abstandsbereich Δt_lim von 0,1 Sekunden gewählt, d. h. mit hoher Konstanz.

Fünftes Kriterium K5: Weiterhin erkennt die ACC-Steuereinrichtung 10, dass eine Relativgeschwindigkeit Δv = v1 - v3, d. h. die Differenz der Eigengeschwindigkeit des Eigenfahrzeugs zu der Geschwindigkeit des Vorderfahrzeugs 3, annähernd 0 ist, d. h. z. B. in einem Abstandsbereich von ± 0,1 m/s. Somit liegt eine annähernd konstante Fahrt vor.

Hierbei können auch weitere Kriterien herangezogen werden, z. B. folgende Kriterien:
Sechstes Kriterium K6: das Vorderfahrzeug 3 kann in eine Klassifikation von Fahrzeugtypen klassifiziert werden kann, die sich während des Mindest-Folgezeitraums (tₘᵢₙ) nicht ändert. Hierbei wird eine Klassifikation in eine zutreffende Fahrzeugklasse erkannt, insbesondere als Truck oder Lastwagen ist. Andere Fahrzeugtypen wie Pkw, Traktoren usw. sollen hierbei aus Sicherheitsgründen nicht herangezogen werden.

Siebtes Kriterium K7: eine Objekt-Breite b3 des Vorderfahrzeugs 3 liegt innerhalb eines zulässigen Bereichs,
achtes Kriterium K8 - die Objekt-Breite b3 des Vorderfahrzeugs 3 ist innerhalb einer Messgenauigkeit konstant,
neuntes Kriterium K9 - eine Relativ-Quergeschwindigkeit (Δvy) des Vorderfahrzeugs 3 zu dem Eigenfahrzeug (1) liegt unterhalb eines Quergeschwindigkeits-Grenzwertes (Δvy_tres),
zehntes Kriterium K10 - eine Objekt-Höhe h3 des erfassten Vorderfahrzeugs 3 liegt innerhalb eines zulässigen Bereichs),
elftes Kriterium K11 - die Objekt-Höhe h3 ist innerhalb einer Messgenauigkeit konstant.

Insbesondere kann das zwölftes Kriterium K12 vorgesehen sein:
das ACC ist bereits aktiv, bevor ein ACC-P angeboten wird. Somit wird das ACC-P nur aus dem sicheren ACC heraus angeboten, in dem somit bereits ein ACC-Sollabstand d_ACC autonom eingeregelt wird.

Dreizehntes Kriterium K13: der räumliche Abstand d und/oder der zeitliche Abstand dt zu dem Vorderfahrzeug 3 ist hinreichend konstant.

Hierzu kann z.B. überprüft werden, ob eine zeitliche Änderung dd des räumlichen Abstandes d und/oder eine zeitliche Änderung ddt des zeitlichen Abstandes dt unterhalb eines Abstands-Grenzwertes d_tres liegt.

Sobald die ACC-Steuereinrichtung 10 somit erkennt, dass die erforderlichen Kriterien K1 bis K5 und ggf. weitere Kriterien erfüllt sind, bietet sie gemäß Verzweigung y in Schritt St3 den ACC-P-Modus ACC-P an, indem sie ein Anfragesignal oder Anzeigesignal S4 an eine Anzeigeeinrichtung 22, z.B. im Dashboardbereich des Fahrers, ausgibt. Wenn der Fahrer in Schritt St4 gemäß Verzweigung y diese Anzeige durch ein Bestätigungssignal S5, z. B. Drücken einer entsprechenden Betätigungseinrichtung 23 bzw. eines Bedienfeldes bestätigt, wird nachfolgend die ACC-Steuereinrichtung 10 bei Aufnahme des Bestätigungssignals S5 gemäß Schritt St5 den ACC-P-Modus ACC-P einstellen und hierzu entsprechend Anforderungssignale S2, S3 an die Motor-Steuereinrichtung 12 und die Bremsen-Steuereinrichtung 14 ausgeben.

In dem ACC-P-Modus ACC-P geregelt die ACC-Steuereinrichtung 10 den ACC-Sollabstand d_ACC autonom ein, indem sie Motoranforderungssignale S2 und Bremsanforderungssignale S3 ausgibt.

Im ACC-P sind abruptere Bremsungen zulässig. So wird z.B. im ACC-P-Modus ACC-P eine maximale ACC-Verzögerung von dem ACC- Wert 2,5 m/s² heraufgesetzt auf z. B. 7,5 m/s², d. h. deutlich abruptere Bremsungen sind zulässig. Auch erfolgt eine Schärferegelung dahingehend, dass die ACC-Bremsrampen im ACC-P-Modus ACC-P steiler bzw. schneller eingestellt werden, d.h. als höhere zeitliche Änderungen der Verzögerung, in m/s³.

Weiterhin wird die Bremsen-Steuereinrichtung 14 dahingehend angesteuert, dass die Prioritäten einer herkömmlichen Bremsung im ACC-Modus geändert werden:
Im ACC-Modus ACC wird der Dauerbremse oder Retarder 16 Vorrang gegenüber den Betriebsbremsen 15 eingeräumt, um den Bremsenverschleiß gering zu halten. Im ACC-P-Modus ACC-P hingegen entfällt dieser Vorrang, so dass hier aufgrund höherer Sicherheit und schnellerer Wirksamkeit bevorzugt die Betriebsbremsen 15 angesteuert werden.

Entsprechend wird die Motor-Steuereinrichtung 12 mit anderen Parametern angesteuert. So kann in dem ACC-P-Modus ACC-P das Motorlimit reduziert werden, damit im Rahmen der eingestellten ACC-P-Sollgeschwindigkeit das Fahrzeug mit entsprechend gleicher Geschwindigkeit wie das Vorderfahrzeug 3 fährt.

Der ACC-P-Modus ACC-P wird hierbei von der ACC-Steuereinrichtung 10 vorteilhafterweise beendet, wenn zumindest die Grund-Kriterien K1 bis K5, oder auch sämtliche anfangs eingesetzten Kriterien nicht mehr erfüllt sind.

Insbesondere kann beim Einscheren des dritten Objektes 7 von einer weiteren Fahrspur 2b zwischen das Vorderfahrzeug 3 und das Eigenfahrzeug 1 sofort der ACC-P-Modus ACC-P beendet werden. Nachfolgend folgt das Eigenfahrzeug 1 dann dem dazwischen gescherten dritten Objekt 7 und kann erst nach Erfüllen der Kriterien K1 bis K5 dann wieder den ACC-P-Modus ACC-P einschalten.

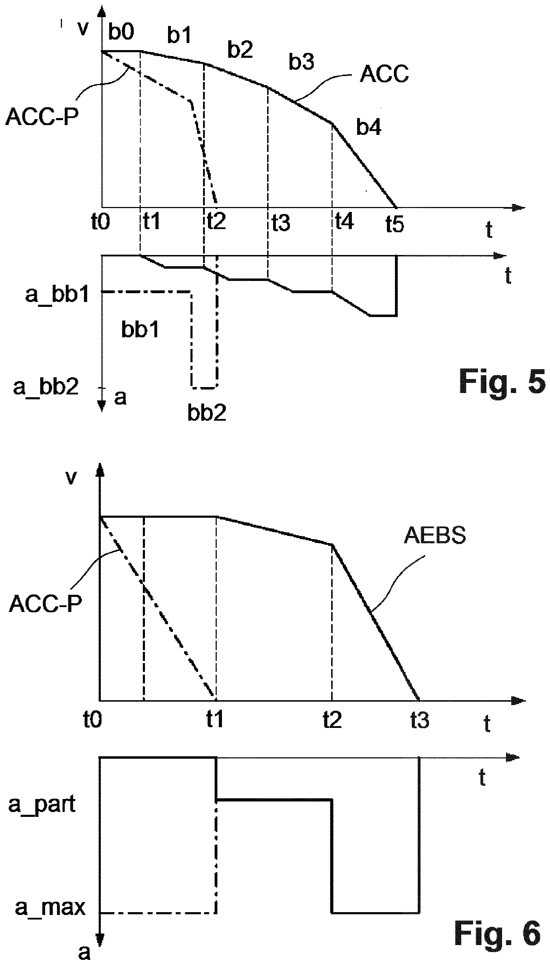

Fig. 5 zeigt einen Bremsvorgang im ACC- Modus und im ACC-P-Modus jeweils als zeitliches Diagramm der Geschwindigkeit v und der Beschleunigung a, die hier nach unten bzw. in den negativen Bereich aufgetragen ist, da Verzögerungen, d.h. negative Beschleunigungen, vorliegen. Entsprechend zeigt Fig. 6 einen derartigen Vergleich zwischen dem AEBS-Modus und dem ACC-P-Modus.

In Fig. 5 verzögert das Vorderfahrzeug 3 zum Zeitpunkt t0 stark bzw. macht eine Notbremsung. Die Radareinrichtung 4 detektiert dies auch, allerdings wird im ACC-Modus nicht sofort eine starke Verzögerung ausgeführt, sondern die ACC-Steuereinrichtung 10 limitiert zunächst zu einem ersten Zeitpunkt t1 das Motormoment MM, fordert dann zu einem zweiten Zeitpunkt t2 von der Bremsensteuereinrichtung 14 den ersten Retarder 16 und - soweit vorhanden später zu einem dritten Zeitpunkt t3 einen zweiten Retarder an, und erst im vierten Schritt zu einem vierten Zeitpunkt t4 die Betriebsbremsen 15. All diese Anforderungen sind aus Komfortgründen rampenförmig ausgeführt, so dass sich die Anfangs-Phase b0 (nach Detektion des Bremsvorganges des Vorderfahrzeuges 3) und die vier Bremsphasen b1, b2, b3, b4 des ACC nach den ersten bis vierten Zeitpunkten t1 bis t4 ergeben.

Das ACC-P bzw. der ACC-P-Modus kann insbesondere sofort bei Erkennung einer Verzögerung des Vorderfahrzeuges 3 zunächst in einer Retarder-Bremsphase bb1 ein maximales (d.h. volles) Bremsmoment M16_max von dem Retarder 16 oder auch den mehreren Retardern/Dauerbremsen fordern, auch ohne Rampe, d.h. sprungartig mit einem Beschleunigungs-Wert a_bb1. In einer nachfolgenden Betriebsbrems-Phase bb2 kann das ACC-P sprungartig maximale (d.h. volle) Verzögerung a_bb2 von den Betriebsbremse 15 fordern, falls die Situation als äußert kritisch identifiziert wird. Allerdings kann das ACC-P auch sofort volle Verzögerung a_bb2 von den Betriebsbremsen 15 fordern, siehe den nachfolgenden Vergleich von Fig. 6

Gemäß Fig. 6 detektiert die Radareinrichtung 4 wiederum bei einem (Start-) Zeitpunkt t0, dass das Vorderfahrzeug 3 stark verzögert bzw. eine Notbremsung macht. Die ACC-Steuereinrichtung 10 führt im AEBS-Modus nicht sofort eine Notbremsung durch. Erst müssen gewisse Kritikalitätskriterien KK erfüllt sein, d.h. es muss kritisch genug sein, dann kommt zum ersten Zeitpunkt t1 erst die 1. Warnung, dann zum zweiten Zeitpunkt t2 die 2. Warnung, die mit einer Teilbremsung a_part einhergeht und dann die Vollbremsung a_max.

Im ACC-P-Modus kann die ACC-Steuereinrichtung 10 hingegen sofort, d.h. ab dem (Start-) Zeitpunkt t0, sobald eine starke Verzögerung a3> a3_tres des Vorderfahrzeuges 3 erkannt wird, gemäß der strichpunktierten Linie eine Notbremsung bzw. Vollbremsung mit a_max durchführen.

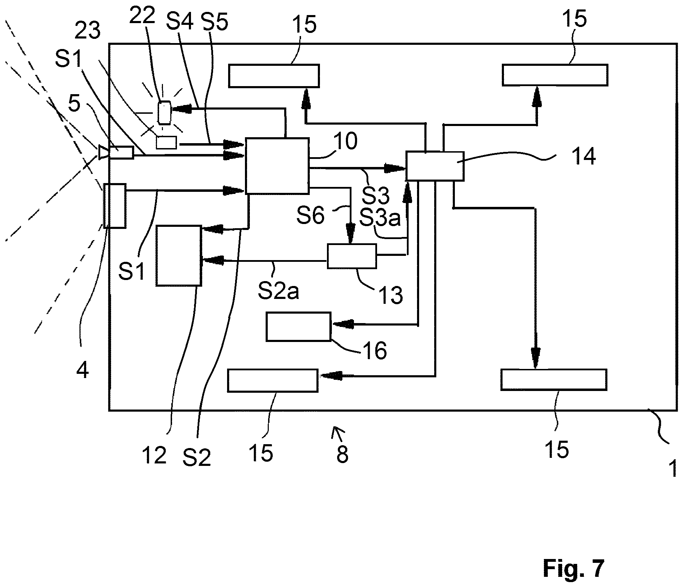

Fig. 7 zeigt eine gegenüber Fig. 3 abgewandelte Ausführungsform, bei der in dem Eigenfahrzeug 1 eine CC-Steuereinrichtung 13 verbaut ist, die eine Tempomatfunktion ausführt und vor der Einstellung eines ACC-Modus jeweils aktiviert wird. Die CC-Steuereinrichtung 13 gibt somit Motoranforderungssignale S2a und Bremsanforderungssignale S3a an die Steuereinrichtungen 12, 14 aus. Hierbei werden die ACC-Steuereinrichtung 10 und die CC-Steuereinrichtung 13 oftmals von verschiedenen Herstellern geliefert. Im ACC-Modus erfolgt keine Kommunikation von der ACC-Steuereinrichtung 10 zu der CC-Steuereinrichtung 13.

Falls die ACC-Steuereinrichtung 10 erkennt, dass das derzeitige maximale Motormoment nicht ausreicht, damit im ACC-P-Modus das Eigenfahrzeug 1 zu dem Vorderfahrzeug 3 aufschließen kann, so können verschiedene Ausführungsform vorgesehen sein, um ein höheres maximales Motormoment anzufordern:
Gemäß einer hierzu ersten Ausführungsform kann die ACC- Steuereinrichtung 10 direkt beim Motorsteuergerät 12 über ein Motoranforderungssignal S3 eine höhere Leistung, d.h. ein höheres maximales Motormoment, anfordern.

Gemäß einer zweiten Ausführungsform kann die ACC- Steuereinrichtung 10 im ACC-P-Modus an die CC- Steuereinrichtung 13 Motormoment-Anforderungssignale S6 ausgeben, damit die CC- Steuereinrichtung 13 über ein Motoranforderungssignal S2a ein höheres Motormoment anfordert, damit das Eigenfahrzeug 1 zu dem Vorderfahrzeug 3 aufschließen kann.

Gemäß einer dritten Ausführungsform gibt die ACC-Steuereinrichtung 10 in dem ACC-P-Modus bei Erkennen, dass die Begrenzung des Motormomentes nicht ausreicht, um im ACC-P-Modus dicht genug auf das Vorderfahrzeug 3 aufzuschließen, ein Anzeigesignal S4 an den Fahrer, dass dieser die Setzgeschwindigkeit bzw. Zielgeschwindigkeit des CC erhöhen soll; somit erfolgt die Erhöhung des Motormomentes durch eine Freigabe des Fahrers an die CC-Steuereinrichtung 13, die ein Motoranforderungssignal S2a für ein höheres maximales Motormoment ausgibt.

### Bezugszeichenliste (Teil der Beschreibung)

- 1: Eigenfahrzeug
- 2: Fahrbahn, Straße
- 2a: eigene Fahrspur
- 3: Vorderobjekt, insbesondere Vorderfahrzeug
- 4: erstes Umfelderfassungssystem, Radareinrichtung

- 7: drittes Objekt
- 8: Abstandsregelsystem
- 10: ACC-Steuereinrichtung
- 12: Motorsteuereinrichtung
- 13: CC-Steuereinrichtung
- 14: Bremsensteuereinrichtung
- 15: Betriebsbremsen
- 16: Retarder, Dauerbremse
- 22: Anzeigeeinrichtung
- 23: Betätigungseinrichtung

- ACC: Abstandsregel-Modus bzw. Abstandsregeltempomat (Adaptive Cruise Control)
- ACC-P: Abstandsregel-Platooning-Modus
- d: räumlicher Abstand des Eigenfahrzeugs 1 zum Vorderfahrzeug 3
- dt: zeitlicher Abstand des Eigenfahrzeugs 1 zum Vorderfahrzeug 3
- d_ACC: ACC-Sollabstand
- d_P: ACC-P-Sollabstand
- Δ d_lim: räumlicher Abstandsbereich
- Δ t_lim: zeitlicher Abstandsbereich
- Δd_ACC-P: räumlicher Zielabstand des ACC-P
- Δ t_ACC-P: zeitlicher Zielabstand des ACC-P
- ddt, dd: zeitliche Änderung des zeitlichen Abstandes dt
- ddt, dd: zeitliche Änderung des räumlichen Abstandes d
- d_tres: Abstands-Grenzwert
- t0: (Start-) Zeitpunkt
- t1: erster Zeitpunkt
- t2: zweiter Zeitpunkt
- t3: dritter Zeitpunkt

- Δvy_tres: Quergeschwindigkeits-Grenzwert
- Δvy: Relativ-Quergeschwindigkeit

- Δ v: Relativgeschwindigkeit)
- FS: sichere Folgefahrtsituation
- S1: Messsignale
- S2: Motoranforderungssignal
- S3: Bremsanforderungssignal
- S4: Anfragesignal an den Fahrer
- S5: Bestätigungssignal durch den Fahrer
- S6: Motormoment-Anforderungssignal
- S2a: Motoranforderungssignal der CC-Steuereinrichtung 13
- S3a: Bremsanforderungssignal der CC-Steuereinrichtung 13

- K1 bis K12: Entscheidungskriterien

## Patentansprüche

1. Verfahren zur Abstandsregelung eines Eigenfahrzeugs (1) zu einem Vorderfahrzeug (3), bei dem
das Eigenfahrzeug (1) ein Abstandsregelsystem (8) zur Einstellung eines automatische Abstandsregel-Modus (ACC) aufweist, mit dem
- ein vorderes Objekt vor dem Eigenfahrzeug (1) von einem Umfeld-Erfassungssystem (4) des Eigenfahrzeugs (1) erfasst wird,
- das vordere Objekt als Vorderfahrzeug (3) erkannt wird und
- ein Abstand (d, dt) zu dem Vorderfahrzeug (3) auf einen ACC-Zielabstand (d_ACC, t_ACC-P) geregelt wird,
wobei festgestellt wird, dass eine sichere Folgefahrtsituation (FS) vorliegt, wenn mindestens folgende Kriterien (K1-K5) erfüllt sind:
- das Vorderfahrzeug (3) ist ein bewegtes Objekt (v_VF > 0) (K1),
- das Vorderfahrzeug (3) wird über einen Mindest-Folgezeitraum (tₘᵢₙ) verfolgt (K2),
- in dem Mindest-Folgezeitraum (tₘᵢₙ) wird das gleiche Vorderfahrzeug (3) verfolgt (K3),
- der Abstand (d, dt) zu dem Vorderfahrzeug (3) liegt innerhalb eines vorgegebenen Abstandsbereichs (Δd_lim, Δt_lim) (K4),
- eine Relativgeschwindigkeit (Δv) liegt innerhalb eines vorgegebenen Geschwindigkeitstoleranzbereichs (Δv_lim) (K5),
wobei bei Feststellen der sicheren Folgefahrtsituation (FS) ein Anzeigesignal (S2) an den Fahrer ausgegeben wird,
und bei Eingabe eines Bestätigungssignals (S3) durch den Fahrer ein automatischer Abstandsregel-Platooning-Modus (ACC-P) eingestellt wird, der einen geringeren Zielabstand (t_ACC-P, d_ ACC-P) als der ACC-Zielabstand (d_ACC, t-ACC) des automatischen Abstandsregel-Modus (ACC) aufweist (Δt_acc-p < Δt_acc und Δd_acc-p < Δd_acc).

2. Verfahren nach Anspruch 1, **dadurch gekennzeichnet, dass** eines oder mehrere der folgenden Kriterien ergänzend vorgesehen sind, um eine sichere Folgefahrtsituation (FS) zu erkennen:
- das Vorderfahrzeug (3) wird in einer zulässigen Objektklasse, z. B. Truck, klassifiziert, die sich während des Mindest-Folgezeitraums (tₘᵢₙ) nicht ändert, (K6)
- eine Objekt-Breite (b3) des Vorderfahrzeugs (3) liegt innerhalb eines zulässigen Bereichs, (K7)
- die Objekt-Breite (b3) ist innerhalb einer Messgenauigkeit konstant,
- eine Relativ-Quergeschwindigkeit (Δvy) des Vorderfahrzeugs (3) zu dem Eigenfahrzeug (1) liegt unterhalb eines Quergeschwindigkeits-Grenzwertes (Δvy_tres) (K8),
- eine Objekt-Höhe (h3) des erfassten Vorderobjektes (3) liegt innerhalb eines zulässigen Bereichs (K9)
- die Objekt-Höhe (h3) ist innerhalb einer Messgenauigkeit konstant,
- der Abstand (d, dt) zu dem Vorderfahrzeug (3) ist hinreichend konstant, z.B. eine zeitliche Änderung (ddt, dd) des Abstandes (d) ist unterhalb eines Abstands-Grenzwertes (d_tres).

3. Verfahren nach einem der vorherigen Ansprüche, **dadurch gekennzeichnet, dass** als weiteres Kriterium (K10) vorgesehen ist:
der automatische Abstandsregel-Modus (ACC) ist bereits eingeschaltet.

4. Verfahren nach einem der vorherigen Ansprüche, **dadurch gekennzeichnet, dass** das Umfeld-Erfassungssystem (4) ein Abstands-Messsystem zum Ermitteln des Abstandes (d) zu einem Vorderobjekt (3) aufweist, insbesondere ein Radar-Abstandsmesssystem (4).

5. Verfahren nach einem der vorherigen Ansprüche, **dadurch gekennzeichnet, dass** durch ergänzende Heranziehung eines zweiten Umfeld-Erfassungssystems, insbesondere einer Kamera,
- eine eindeutige Identifizierung des Vorderfahrzeugs (3) erfolgt (K3), und/oder
- die Objektklasse ermittelt wird (K6).

6. Verfahren nach einem der vorherigen Ansprüche, **dadurch gekennzeichnet, dass** das Anzeigesignal (S2) in einer optischen Anzeigeeinrichtung in der Fahrzeugkabine angezeigt wird und der Fahrer das Bestätigungssignal (S3) zur Einstellung des autonomen Abstandsregel- Platooning-modus (ACC-P) als haptische Eingabe während der Anzeige des Anzeigesignals (S2) eingibt.

7. Verfahren nach einem der vorherigen Ansprüche, **dadurch gekennzeichnet, dass** bei eingestellten Abstandsregel-Platooning-Modus (ACC-P) und nachträglichem Nichterfüllen eines der Kriterien (K1 - K5, K6 - K10) der Abstandsregel-Platooning-Modus (ACC-P) beendet wird und in den automatischen Abstandsregel-Modus (ACC) umgeschaltet wird.

8. Verfahren nach einem der vorherigen Ansprüche, **dadurch gekennzeichnet, dass** im dem automatischen Abstandsregel-Platooning-Modus (ACC-P) vom Betrag her größere maximale Fahrzeugverzögerungen und/oder steilere Bremsrampen vorgesehen sind als in dem automatischen Abstandsregel-Modus (ACC).

9. Verfahren nach einem der vorherigen Ansprüche, **dadurch gekennzeichnet, dass**
im automatischen Abstandsregelmodus (ACC) eine erste Regelstrategie zum bevorzugten Einsatz einer verschleißfreien Retarderbremse gegenüber einer Betriebsbremse vorgesehen ist, und
im automatischen Abstandsregel-Platooning-Modus (ACC-P) eine zweite Brems-Regelstrategie ohne bevorzugten Einsatz einer verschleißfreien Retarderbremse und/oder ohne Einsatz einer verschleißfreien Retarderbremse vorgesehen ist.

10. Verfahren nach einem der vorherigen Ansprüche, **dadurch gekennzeichnet, dass**
im automatischen Abstandsregelmodus (ACC) eine gleiche Verzögerung (lal) des Eigenfahrzeugs (1) wie eine erfasste Vorderfahrzeug- Verzögerung (la3l) vorgesehen ist,
hingegen im automatischen Abstandsregel-Platooning-Modus (ACC-P) eine vom Betrag her größere Verzögerung (IaI) des Eigenfahrzeugs (1) vorgesehen ist als die erfasste Vorderfahrzeug-Verzögerung (la3l), zur Vermeidung einer Annäherung durch zeitlich sich erhöhende Verzögerungswerte.

11. Verfahren nach einem der vorherigen Ansprüche, **dadurch gekennzeichnet, dass**
der automatische Abstandsregelmodus (ACC) einen zeitlichen und/oder räumlichen ACC-Zielabstand (d_ACC, t_ACC-P) und einen kleineren, nicht unterschreitbaren Minimal-Abstand aufweist,
und der automatische Abstands-Platooning-Modus (ACC-P) keinen zusätzlichen Minimal-Abstand aufweist.

12. Verfahren nach einem der vorherigen Ansprüche, **dadurch gekennzeichnet, dass**
weiterhin ein autonomer Notbremssystem-Modus (AEBS) mit einer AEBS-Kaskade zur aufeinanderfolgenden Einleitung einer ersten Fahrerwarnung, einer Teilbremsung und einer Notbremsung vor einem Unfall vorgesehen ist,
wobei im automatischen Abstandsregel-Platooning-Modus (ACC-P) eine Notbremsung ohne die erste Fahrerwarnung und/oder ohne die Teilbremsung eingeleitet wird.

13. Verfahren nach einem der vorherigen Ansprüche, **dadurch gekennzeichnet, dass** bei Erkennen, dass ein zweites Erfassungsobjekt zwischen das Eigenfahrzeug (1) und das Vorderobjekt (3) gelangt, insbesondere bei Erkennen eines Einschervorgangs von einer benachbarten Fahrspur, der Abstandsregel-Platooning-Modus (acc-p) beendet wird.

14. Verfahren nach einem der vorherigen Ansprüche, **dadurch gekennzeichnet, dass** das Eigenfahrzeug (1) und das Vorderfahrzeug (3) in keinem Datenaustausch miteinander sind, insbesondere in keiner Übertragung von Signalen über die Einleitung von Bremsvorgängen.

15. Verfahren nach einem der vorherigen Ansprüche, **dadurch gekennzeichnet, dass** in dem Fall, dass erkannt wird, dass im Abstandsregel-Platooning-Modus (ACC-P) ein aktuelles maximales Motormoment (M_max) nicht ausreicht, um zu dem Vorderfahrzeug (3) aufzuschließen, ein höheres maximales Motormoment (M_max) angefordert wird
- direkt von einem Motorsteuergerät (12), oder
- durch Ausgabe eines Motormoment-Anforderungssignals (S6) an eine zusätzliche CC-Steuereinrichtung (13)
- durch Ausgabe eines Anzeigesignals (S4) an den Fahrer und Eingabe eines Bestätigungssignals (S5) durch den Fahrer.

16. Abstandsregelsystem (8) für ein Eigenfahrzeug (1), wobei das Abstandsregelsystem (8) aufweist:
ein Umfeld-Erfassungssystem (4) zum Erfassen eines vorderen Umfeldes vordem Eigenfahrzeug (1),
und eine ACC-Steuereinrichtung (10), die Messsignale (S1) des Umfeld-Erfassungssystems (4) aufnimmt, und
eine Anzeigeeinrichtung zur Aufnahme von Anzeigesignalen (S2) der ACC-Steuereinrichtung (10) und Ausgabe einer Fahreranzeige sowie eine Betätigungseinrichtung zur Betätigung durch den Fahrer und Ausgabe eines Bestätigungssignals an die ACC-Steuereinrichtung (10),
wobei die ACC-Steuereinrichtung (10) eingerichtet ist, ein Verfahren nach einem der vorherigen Ansprüche durchzuführen.

17. Abstandsregelsystem (8) nach Anspruch 16, **dadurch gekennzeichnet, dass** das Umfeld-Erfassungssystem ein Abstands-Erkennungssystem insbesondere eine Radareinrichtung (4) ist.

18. Abstandsregelsystem (8) nach Anspruch 16 oder 17, **dadurch gekennzeichnet, dass** es zusätzlich zu der ACC-Steuereinrichtung (10) eine CC-Steuereinrichtung (13) aufweist,
wobei die ACC-Steuereinrichtung (10) im Abstandsregel-Platooning-Modus (ACC-P) bei Erkennen, dass ein aktuelles maximales Motormoment (M_max) nicht ausreicht, um zu dem Vorderfahrzeug (3) aufzuschließen, sie ein höheres maximales Motormoment (M_max) anfordert
- direkt durch ein Motoranforderungssignal (S2) an ein Motorsteuergerät (12), oder
- durch Ausgabe eines Motormoment-Anforderungssignals (S6) an die CC-Steuereinrichtung (13), oder
- durch Ausgabe eines Anzeigesignals (S4) an den Fahrer und Eingabe eines Bestätigungssignals (S5) durch den Fahrer.

## Claims

1. A method for distance control of a subject vehicle (1) to a front vehicle (3), in which the subject vehicle (1) has a distance control system (8) for setting an automatic distance control mode (ACC), with which
- a front object in front of the subject vehicle (1) is detected by a surroundings detection system (4) of the subject vehicle (1),
- the front object is detected as a front vehicle (3) and
- a distance (d, dt) to the front vehicle (3) is controlled to a ACC target distance (d_ACC, t_ACC-P), wherein it is determined that a secure follow-on travel situation (FS) is present when at least the following criteria (K1-K5) are met:
- the front vehicle (3) is a moved object (v_VF>0) (K1),
- the front vehicle (3) is tracked over a minimum following time period (tₘᵢₙ) (K2),
- in the minimum following time period (tₘᵢₙ) the same front vehicle (3) is tracked (K3),
- the distance (d, dt) to the front vehicle (3) lies within a predefined distance range (Δd_lim, Δt_lim) (K4),
- a relative speed (Δv) lies within a predefined speed tolerance range speed tolerance range (Δv_lim) (K5), wherein upon detection of the secure follow-on travel situation (FS) a display signal (S2) is output to the driver, and up on input of a confirmation signal (S3) by the driver an automatic distance-control backed-up traffic travel mode (ACC-P) is set, which has a lower target distance (t_ACC-P, d_ACC-P) as the ACC-target distance (d_ACC, t-ACC) of the automatic distance control mode (ACC) (Δt_acc-p < Δt_acc and Δd_acc-p < Δd_acc).

2. The method according to claim 1, **characterized in that** one or more of the following criteria are additionally provided, in order to detect a secure follow-on travel situation (FS):
- the front vehicle (3) is classified in a permissible object class, e.g., truck, which does not change during the minimum following time period (tₘᵢₙ), (K6)
- an object width (b3) of the front vehicle (3) lies within a permissible range (K7)
- the object width (b3) is constant within a measurement accuracy,
- a relative transverse speed (Δvy) of the front vehicle (3) to the subject vehicle (1) lies below a transverse speed limit value (Δvy_tres) (K8),
- an object height (h3) is constant within a permissible range (K9)
- the object height (h3) is constant within a measurement accuracy,
- the distance (d, dt) to the front vehicle (3) is sufficiently constant, e.g., a time change (ddt, dd) of the distance (d) is below a distance limit value (d_tres).

3. The method according to any of the preceding claims, **characterized in that** provision is made as a further criterion (K10): the automatic distance control mode (ACC) is already switched on.

4. The method according to any of the preceding claims, **characterized in that** the surroundings detection system (4) has a distance measurement system for determining the distance (d) to a front object (3), in particular a radar distance measurement system (4).

5. The method according to any of the preceding claims, **characterized in that** by additional use of a second surroundings detection system, in particular a camera,
- an unambiguous identification of the front vehicle (3) occurs (K3),
and/or
- the object class is determined (K6).

6. The method according to any of the preceding claims, **characterized in that** the display signal (S2) is displayed in an optical display device in the vehicle cab and the driver inputs the confirmation signal (S3) for setting the autonomous distance-control backed-up traffic travel mode (ACC-P) as haptic input during the display of the display signal (S2).

7. The method according to any of the preceding claims, **characterized in that** in the event of a set distance-control backed-up traffic travel mode (ACC-P) and subsequent failure to meet of one of the criteria (K1 - K5, K6 - K10) the distance-control backed-up traffic travel mode (ACC-P) is terminated and the program switches to the automatic distance control mode (ACC).

8. The method according to any of the preceding claims, **characterized in that** in the automatic distance-control backed-up traffic travel mode (ACC-P), from the amount, greater maximum vehicle delays and/or steeper braking ramps are provided than in the automatic distance control mode (ACC).

9. The method according to any of the preceding claims, **characterized in that** in the automatic distance control mode (ACC) a first control strategy for the preferred use of a wear-free retarder brake vis-à-vis a service brake is provided, and in the automatic distance-control backed-up traffic travel mode (ACC-P) a second braking control strategy is provided without preferred use of a wear-free retarder brake and/or without use of a wear-free retarder brake.

10. The method according to any of the preceding claims, **characterized in that** in the automatic distance control mode (ACC) an identical delay (lal) of the subject vehicle (1) is provided as a recorded front vehicle delay (la3l), whereas in the automatic distance-control backed-up traffic travel mode (ACC-P) a greater delay (lal) of the subject vehicle (1) from the amount is provided than the detected front vehicle delay (la3l), to avoid an approximation through chronologically increasing delay values.

11. The method according to any of the preceding claims, **characterized in that** the automatic distance control mode (ACC) has a time and/or spatial ACC-target distance (d_ACC, t_ACC-P) and a smaller minimum distance which cannot be undershot, and the automatic distance platooning mode (ACC-P) has no additional minimum distance.

12. The method according to any of the preceding claims, **characterized in that**, in addition, an autonomous emergency brake system mode (AEBS) is provided with an AEBS cascade for successive initiation of a first driver warning, a partial braking and an emergency braking prior to an accident, wherein in the automatic distance-control backed-up traffic travel mode (ACC-P) an emergency braking is initiated without the first driver warning and/or without the partial braking.

13. The method according to any of the preceding claims, **characterized in that** a second detection object gets between the subject vehicle (1) and the front vehicle (3), in particular upon detection of a lane change maneuver from an adjacent traffic lane, the distance control platooning mode (acc-p) is terminated.

14. The method according to any of the preceding claims, **characterized in that** the subject vehicle (1) and the front vehicle (3) are in no data exchange with each other, in particular in no transmission of signals about the initiation of braking operations.

15. The method according to any of the preceding claims, **characterized in that** in the case that it is detected that in the distance-control backed-up traffic travel mode (ACC-P) a current maximum engine torque (M_max) is not sufficient to catch up to the front vehicle (3), a higher maximum engine torque (M_max) is requested - directly by an engine control device (12), or - by outputting an engine torque request signal (S6) to an additional CC control device (13) - by outputting a display signal (S4) to the driver and inputting a confirmation signal (S5) by the driver.

16. A distance control system (8) for a subject vehicle (1), wherein the distance control system (8) has: a surroundings detection system (4) for detecting a front surroundings in front of the subject vehicle (1), and an ACC control device (10), which receives measurement signals (S1) of the surroundings detection system (4), and a display device for receiving display signals (S2) of the ACC control device (10) and outputting a driver display and a confirmation device for confirmation by the driver and outputting of a confirmation signal to the ACC control device (10), wherein the ACC control device (10) is set up/equipped to carry out a method according to any of the preceding claims.

17. The distance control system (8) according to claim 16, **characterized in that** the surroundings detection system is a distance detection system, in particular a radar device (4).

18. The distance control system (8) according to claim 16 or 17, **characterized in that** in addition to the ACC control device (10) it has a CC control device (13),
wherein the ACC-control device (10) in the distance-control backed-up traffic travel mode (ACC-P) upon detection that a current maximum engine torque (M_max) is not sufficient to catch up the front vehicle (3), it requests a higher maximum engine torque (M_max),
- directly by an engine request signal (S2) to a engine control device (12), or
- by outputting an engine torque request signal (S6) to the CC control device (13), or
- by outputting a display signal (S4) to the driver and inputting a confirmation signal (S5) by the driver.

## Revendications

1. Procédé pour la régulation de distance d'un véhicule propre (1) par rapport à un véhicule avant (3), selon lequel
le véhicule propre (1) présente un système de régulation de distance (8) pour le réglage d'un mode de régulation de distance automatique (ACC), avec lequel
- un objet avant devant le véhicule propre (1) est détecté par un système de détection d'environnement (4) du véhicule propre (1),
- l'objet avant est identifié comme véhicule avant (3) et
- une distance (d, dt) par rapport au véhicule avant (3) est régulée sur une distance cible ACC (d_ACC, t_ACC-P),
dans lequel il est établi qu'une situation de conduite suivie sûre (FS) est présente lorsqu'au moins les critères suivants (K1-K5) sont remplis :
- le véhicule avant (3) est un objet en mouvement (v_VF > 0) (K1),
- le véhicule avant (3) est suivi sur une période de temps de suivi minimale (tₘᵢₙ) (K2),
- dans la période de temps de suivi minimale (tₘᵢₙ), le même véhicule avant (3) est suivi (K3),
- la distance (d, dt) par rapport au véhicule avant (3) se situe à l'intérieur d'une plage de distance (Δd_lim, Δt_lim) prédéfinie (K4),
- une vitesse relative (Δv) se situe à l'intérieur d'une plage de tolérance de vitesse (Δv_lim) prédéfinie (K5),
dans lequel lors de l'établissement de la situation de conduite suivie sûre (FS), un signal d'affichage (S2) est délivré au conducteur,
et lors de l'entrée d'un signal de confirmation (S3) par le conducteur un mode de conduite en convoi automatisé à régulation de distance automatique (ACC-P) est réglé, qui présente une distance cible (t_ACC-P, d_ACC-P) plus petite que la distance cible ACC (d_ACC, t-ACC) du mode de régulation de distance automatique (ACC) (Δt_acc-p < Δt_acc et Δd_acc-p < Δd_acc).

2. Procédé selon la revendication 1, **caractérisé en ce qu'**un ou plusieurs des critères suivants sont prévus en complément, afin d'identifier une situation de conduite suivie sûre (FS) :
- le véhicule avant (3) est classé dans une classe d'objets admissible, par exemple un camion, qui ne change pas pendant la période de temps de suivi minimale (tₘᵢₙ), (K6)
- une largeur d'objet (b3) du véhicule avant (3) se situe à l'intérieur d'une plage admissible, (K7)
- la largeur d'objet (b3) est constante à l'intérieur d'une précision de mesure,
- une vitesse transversale relative (Δvy) du véhicule avant (3) par rapport au véhicule propre (1) se situe au-dessous d'une valeur limite de vitesse transversale (Δvy_tres) (K8),
- une hauteur d'objet (h3) de l'objet avant (3) détecté se situe à l'intérieur d'une plage admissible (K9)
- la hauteur d'objet (h3) est constante à l'intérieur d'une précision de mesure,
- la distance (d, dt) par rapport au véhicule avant (3) est suffisamment constante, par exemple une modification temporelle (ddt, dd) de la distance (d) est au-dessous d'une valeur limite de distance (d_tres).

3. Procédé selon l'une quelconque des revendications précédentes, **caractérisé en ce qu'**il est prévu comme autre critère (K10) :
le mode de régulation de distance automatique (ACC) est déjà activé.

4. Procédé selon l'une quelconque des revendications précédentes, **caractérisé en ce que** le système de détection d'environnement (4) présente un système de mesure de distance pour déterminer la distance (d) par rapport à un objet avant (3), en particulier un système de mesure de distance radar (4).

5. Procédé selon l'une quelconque des revendications précédentes, **caractérisé en ce que** par utilisation complémentaire d'un deuxième système de détection d'environnement, en particulier d'une caméra,
- une identification univoque du véhicule avant (3) s'effectue (K3),
et/ou
- la classe d'objet est déterminée (K6).

6. Procédé selon l'une quelconque des revendications précédentes, **caractérisé en ce que** le signal d'affichage (S2) est affiché dans un dispositif d'affichage optique dans la cabine de véhicule et le conducteur entre le signal de confirmation (S3) pour le réglage du mode de conduite en convoi automatisé à régulation de distance autonome (ACC-P) en tant qu'entrée haptique pendant l'affichage du signal d'affichage (S2).

7. Procédé selon l'une quelconque des revendications précédentes, **caractérisé en ce que** lorsque le mode de conduite en convoi automatisé à régulation de distance (ACC-P) est réglé et qu'un des critères (K1 - K5, K6 - K10) n'est pas rempli ultérieurement, le mode de conduite en convoi automatisé à régulation de distance (ACC-P) est arrêté et amené à basculer dans le mode de régulation de distance automatique (ACC).

8. Procédé selon l'une quelconque des revendications précédentes, **caractérisé en ce que** dans le mode de conduite en convoi automatisé à régulation de distance automatique (ACC-P) du point de vue de la valeur des décélérations de véhicule maximales plus grandes et/ou des rampes de freinage plus raides que dans le mode de régulation de distance automatique (ACC) sont prévues.

9. Procédé selon l'une quelconque des revendications précédentes, **caractérisé en ce que**
dans le mode de régulation de distance automatique (ACC) une première stratégie de régulation pour l'emploi préféré d'un frein ralentisseur sans usure par rapport à un frein de service est prévue, et
dans le mode de conduite en convoi automatisé à régulation de distance automatique (ACC-P) une deuxième stratégie de régulation de freinage sans emploi préféré d'un frein ralentisseur sans usure et/ou sans emploi d'un frein ralentisseur sans usure est prévue.

10. Procédé selon l'une quelconque des revendications précédentes, **caractérisé en ce que**
dans le mode de régulation de distance automatique (ACC) une décélération (IaI) du véhicule propre (1) identique à une décélération de véhicule avant (Ia3I) détectée est prévue,
par contre dans le mode de conduite en convoi automatisé à régulation de distance automatique (ACC-P) une décélération (IaI) du véhicule propre (1) plus grande du point de vue de la valeur que la décélération de véhicule avant (Ia3I) détectée est prévue, pour éviter un rapprochement par des valeurs de décélération augmentant dans le temps.

11. Procédé selon l'une quelconque des revendications précédentes, **caractérisé en ce que**
le mode de régulation de distance automatique (ACC) présente une distance cible ACC (d_ACC, t_ACC-P) temporelle et/ou spatiale et une distance minimale plus petite, au-dessous de laquelle il est impossible de passer,
et le mode de conduite en convoi automatisé à régulation de distance automatique (ACC-P) ne présente pas de distance minimale additionnelle.

12. Procédé selon l'une quelconque des revendications précédentes, **caractérisé en ce que**
un mode de système de freinage d'urgence autonome (AEBS) avec une cascade AEBS pour le déclenchement successif d'un premier avertissement au conducteur, d'un freinage partiel et d'un freinage d'urgence avant un accident est prévu,
dans lequel dans le mode de conduite en convoi automatisé à régulation de distance automatique (ACC-P) un freinage d'urgence sans le premier avertissement au conducteur et/ou sans le freinage partiel est déclenché.

13. Procédé selon l'une quelconque des revendications précédentes, **caractérisé en ce que** lors de l'identification qu'un deuxième objet de détection parvient entre le véhicule propre (1) et l'objet avant (3), en particulier lors de l'identification d'un processus de rabattement à partir d'une voie voisine, le mode de conduite en convoi automatisé à régulation de distance (acc-p) est arrêté.

14. Procédé selon l'une quelconque des revendications précédentes, **caractérisé en ce que** le véhicule propre (1) et le véhicule avant (3) ne sont pas en échange de données l'un avec l'autre, en particulier pas en transmission de signaux par l'intermédiaire du déclenchement de processus de freinage.

15. Procédé selon l'une quelconque des revendications précédentes, **caractérisé en ce que** dans le cas où il serait identifié que dans le mode de conduite en convoi automatisé à régulation de distance (ACC-P) un couple moteur maximal (M_max) actuel ne suffit pas à rattraper le véhicule avant (3), un couple moteur maximal (M_max) plus élevé est demandé
- directement par un appareil de commande de moteur (12), ou
- par délivrance d'un signal de demande de couple moteur (S6) à un dispositif de commande CC (13) additionnel
- par délivrance d'un signal d'affichage (S4) au conducteur et entrée d'un signal de confirmation (S5) par le conducteur.

16. Système de régulation de distance (8) pour un véhicule propre (1), dans lequel le système de régulation de distance (8) présente :
un système de détection d'environnement (4) pour la détection d'un environnement avant devant le véhicule propre (1),
et un dispositif de commande ACC (10), qui reçoit des signaux de mesure (S1) du système de détection d'environnement (4), et
un dispositif d'affichage pour la réception de signaux d'affichage (S2) du dispositif de commande ACC (10) et la délivrance d'un affichage pour le conducteur ainsi qu'un dispositif d'actionnement pour l'actionnement par le conducteur et la délivrance d'un signal de confirmation au dispositif de commande ACC (10), dans lequel le dispositif de commande ACC (10) est conçu pour mettre en œuvre un procédé selon l'une quelconque des revendications précédentes.

17. Système de régulation de distance (8) selon la revendication 16, **caractérisé en ce que** le système de détection d'environnement est un système d'identification de distance, en particulier un dispositif radar (4).

18. Système de régulation de distance (8) selon la revendication 16 ou 17, **caractérisé en ce qu'**il présente en plus du dispositif de commande ACC (10) un dispositif de commande CC (13),
dans lequel le dispositif de commande ACC (10) dans le mode de conduite en convoi automatisé à régulation de distance (ACC-P) lors de l'identification qu'un couple moteur maximal (M_max) actuel ne suffit pas à rattraper le véhicule avant (3), il demande un couple moteur maximal (M_max) plus élevé
- directement par un signal de demande de moteur (S2) à un appareil de commande de moteur (12), ou
- par délivrance d'un signal de demande de couple moteur (S6) au dispositif de commande CC (13), ou
- par délivrance d'un signal d'affichage (S4) au conducteur et entrée d'un signal de confirmation (S5) par le conducteur.
